(19) **Europäisches Patentamt / European Patent Office / Office européen des brevets**

(11) **EP 3 999 880 B1**

(12) **EUROPEAN PATENT SPECIFICATION**

(45) Date of publication and mention of the grant of the patent:
**09.10.2024 Bulletin 2024/41**

(21) Application number: **20743353.3**

(22) Date of filing: **14.07.2020**

(51) International Patent Classification (IPC):
***G01V 1/30*** *(2006.01)*

(52) Cooperative Patent Classification (CPC):
**G01V 1/307; G01V 2210/61; G01V 2210/632**

(86) International application number:
**PCT/IB2020/056594**

(87) International publication number:
**WO 2021/009670 (21.01.2021 Gazette 2021/03)**

(54) **SYSTEM AND METHOD FOR SEISMIC DATA CALIBRATION**

SYSTEM UND VERFAHREN ZUR KALIBRIERUNG SEISMISCHER DATEN

SYSTÈME ET PROCÉDÉ D'ÉTALONNAGE DE DONNÉES SISMIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2019 US 201962874646 P**

(43) Date of publication of application:
**25.05.2022 Bulletin 2022/21**

(73) Proprietor: **Chevron U.S.A. Inc.**
**San Ramon, CA 94583 (US)**

(72) Inventors:
• **SHULER, Ashley Elizabeth**
**San Ramon, California 94583 (US)**
• **ROY, Prasenjit**
**San Ramon, California 94583 (US)**

• **CARDONA, Reynaldo**
**San Ramon, California 94583 (US)**

(74) Representative: **Haseltine Lake Kempner LLP**
**One Portwall Square**
**Portwall Lane**
**Bristol BS1 6BH (GB)**

(56) References cited:
**US-B2- 10 274 625**

• **DHANANJAY KUMAR: "Seismic amplitude calibration for quantitative interpretation", GEOS ALUMNI JOURNAL 2018, September 2018 (2018-09-01), pages 34 - 37, XP055731633, Retrieved from the Internet <URL:http://www.angelfire.com/sd/dhananjay/images/Kumar_GEOS_2018_Seismic_Amplitude_Calibration_for_QI.pdf> [retrieved on 20200917]**

EP 3 999 880 B1

**Description**

<DELETED>
<DELETED>

TECHNICAL FIELD

The disclosed embodiments relate generally to techniques for calibrating seismic data representative of subsurface volumes of interest such as hydrocarbon reservoirs and, in particular, to a method of calibrating seismic data using statistical properties of shale.

BACKGROUND

Seismic exploration involves surveying subterranean geological media for hydrocarbon deposits. A survey typically involves deploying seismic sources and seismic sensors at predetermined locations. The sources generate seismic waves, which propagate into the geological medium creating pressure changes and vibrations. Variations in physical properties of the geological medium give rise to changes in certain properties of the seismic waves, such as their direction of propagation and other properties.

Portions of the seismic waves reach the seismic sensors. Some seismic sensors are sensitive to pressure changes (e.g., hydrophones), others to particle motion (e.g., geophones), and industrial surveys may deploy one type of sensor or both. In response to the detected seismic waves, the sensors generate corresponding electrical signals, known as traces, and record them in storage media as seismic data. Seismic data will include a plurality of "shots" (individual instances of the seismic source being activated), each of which are associated with a plurality of traces recorded at the plurality of sensors.

Seismic data is processed to create seismic images that can be interpreted to identify subsurface geologic features including hydrocarbon deposits. Seismic data calibration is the process of scaling seismic amplitudes to true earth reflectivity. After calibration, processed seismic data and synthetic seismic data created from forward models of well logs will have amplitudes in the same range, and the amplitudes will change in a similar fashion with angle of incidence. Calibration is a necessary step prior to any quantitative analysis of seismic amplitudes, including calculation of seismic attributes, quantitative analysis of amplitude versus angle (AVA) responses, and seismic inversion. The ability to define the location of rock and fluid property changes in the subsurface is crucial to our ability to make the most appropriate choices for purchasing materials, operating safely, and successfully completing projects. Project cost is dependent upon accurate prediction of the position of physical boundaries within the Earth. Decisions include, but are not limited to, budgetary planning, obtaining mineral and lease rights, signing well commitments, permitting rig locations, designing well paths and drilling strategy, preventing subsurface integrity issues by planning proper casing and cementation strategies, and selecting and purchasing appropriate completion and production equipment. Reference may be made to US 10 274 625 B2 which relates to a system and method for porosity estimation in low-porosity subsurface reservoirs. It discloses a computer-implemented method of seismic data calibration wherein a non-reservoir shale region is identified based on knowledge about local geology. Amplitude statistics from this region are compared with modelled synthetic amplitudes for non-reservoir shale for deriving a calibration scalar which is then multiplied to the recorded seismic amplitude.

Reference may be made to Dhananjay Kumar: "Seismic amplitude calibration for quantitative interpretation", GEOS Alumni Journal 2018, 1 September 2018, pages 34-37.

There exists a need for improved seismic calibration which will enable better identification of and production from potential hydrocarbon reservoirs.

SUMMARY

The present invention is defined by the appended independent claims to which reference should now be made. Specific embodiments are defined in the dependent claims. The scalars may be constant or time/depth-varying.

To address the aforementioned problems, some embodiments provide a non-transitory computer readable storage medium storing one or more programs. The one or more programs comprise instructions, which when executed by a computer system with one or more processors and memory, cause the computer system to perform any of the methods provided herein.

To address the aforementioned problems, some embodiments provide a computer system. The computer system includes one or more processors, memory, and one or more programs. The one or more programs are stored in memory and configured to be executed by the one or more processors. The one or more programs include an operating system and instructions that when executed by the one or more processors cause the computer system to perform any of the methods provided herein.

BRIEF DESCRIPTION OF THE DRAWINGS

Figure 1 illustrates an AVA response with a measure of variation;

Figure 2 illustrates a flowchart for a method of seismic calibration, in accordance with some embodiments;

Figure 3 illustrates a step of a method of seismic calibration, in accordance with some embodiments;

Figure 4 illustrates a step of a method of seismic calibration, in accordance with some embodiments;

Figure 5 illustrates a step of a method of seismic calibration, in accordance with some embodiments;

Figure 6 illustrates a step of a method of seismic calibration, in accordance with some embodiments; and

Figure 7 is a block diagram illustrating a seismic calibration system, in accordance with some embodiments.

Like reference numerals refer to corresponding parts throughout the drawings.

DETAILED DESCRIPTION OF EMBODIMENTS

Described below are methods, systems, and computer readable storage media that provide a manner of seismic data calibration.

Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details. In other instances, well-known methods, procedures, components, and mechanical apparatus have not been described in detail so as not to unnecessarily obscure aspects of the embodiments.

Seismic imaging of the subsurface is used to identify potential hydrocarbon reservoirs. Seismic data is acquired at a surface (e.g. the earth's surface, ocean's surface, or at the ocean bottom) as seismic traces which collectively make up the seismic dataset. The seismic dataset includes at least three dimensions: a time or depth axis, spatial axis, and an angle or offset axis. The angle or offset axis represents the data as recorded based on the reflection angle in the subsurface where the seismic energy reflected. The seismic amplitude at different reflection angles will vary depending on the rock and fluid properties at the reflection point. This is referred to as the amplitude variation with angle or offset (AVA/AVO). Properly calibrating the seismic data is necessary in order to allow quantitative analysis of seismic amplitudes (including the AVA response), rather than just qualitative. Calibration ensures that observed and synthetic seismic data are scaled consistently and enables a direct comparison between the two. By comparing the seismic attributes associated with forward models generated from well logs to those observed in calibrated seismic data, rock properties such as porosity, lithology, fluid type and saturation, can be estimated.

Conventional methods of seismic calibration have several problems. They can be time-consuming and prone to error. In a typical calibration workflow using angle stacks (which are formed by summing a range of traces along the angle axis), well ties are first performed to align synthetic seismic generated from well logs with the observed seismic data in the time domain. Seismic amplitudes are measured in one or more time windows for each angle stack for both the observed and synthetic seismic datasets, and then scalars for each angle stack are calculated as the ratio of the synthetic seismic over the observed seismic, such that the product of the scalar and the observed seismic data would equal the calibrated seismic amplitude. Seismic scalars can be either constant or time-variant for each angle stack, and they can be computed either using a single well or a group of wells. The scalars themselves have large error bars since they are based on a small number of data points. Calibration is typically performed in the time domain, and since many modern datasets are in the depth domain, multiple iterations of time-to-depth conversion may be required. In situations where there are no wells in the area of the seismic data, calibration is commonly based on practitioner experience and "rules of thumb" such as scaling the far stack to be 70% of the near stack. Errors in calibration can be very costly to oil companies, particularly in frontier areas, and can make the difference between drilling a discovery or a dry hole.

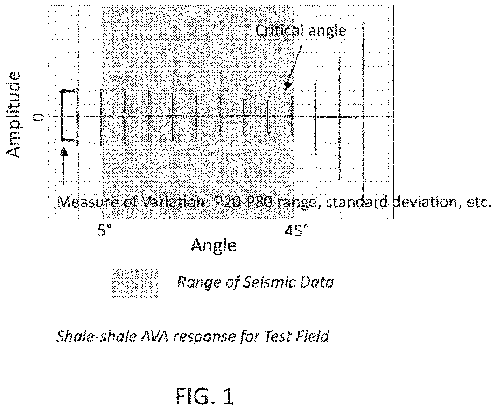

The present invention includes embodiments of a method and system for seismic data calibration that relies on shale-based calibration. Shale intervals are common and relatively easy to identify in seismic data as they are regional features with low reflectivity. Shale-shale reflectivity (i.e., where two different adjacent shales cause a seismic reflection) has a systematic AVA response that can be exploited for efficient and accurate seismic calibration. In general, below the critical angle, shale-shale reflectivity has symmetric amplitude distribution with zero mean and decreasing measure of variation with angle (dimming) as shown in Figure 1. Using the statistical properties of the shale reflectivity to calibrate the seismic data provides robust and efficient seismic calibration compared to conventional calibration methods.

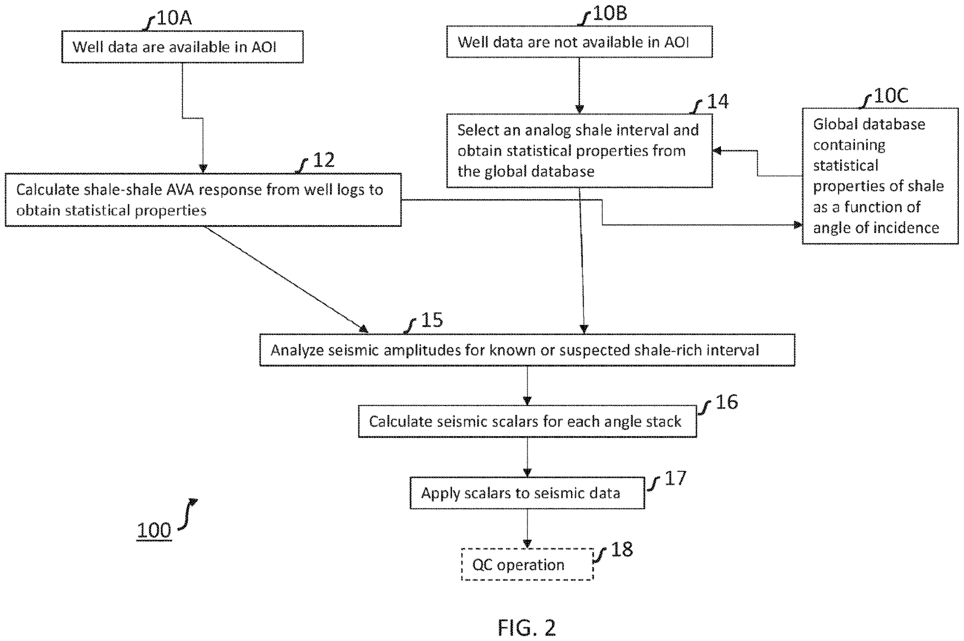

Figure 2 illustrates a flowchart of a method 100 for seismic data calibration. In Figure 2, there are two embodiments shown dependent on whether well data are available in the area of interest (AOI)(10A) which is also covered by at least one seismic dataset or well data are not available in the AOI (10B). Method 100 also may include a global database containing statistical properties of shale as a function of angle of incidence (10C). The seismic dataset may be a plurality of angle stacks or seismic gathers.

If well data are not available in the AOI (10B), the method selects an analog shale interval and obtains statistical properties from the global database shale (14). The selection may be based on either analog data from a similar geological setting or a global average of data. The statistical properties of shales can also be evaluated with regard to factors such as environment of deposition, depth below mudline, age, mineralogy, and the like.

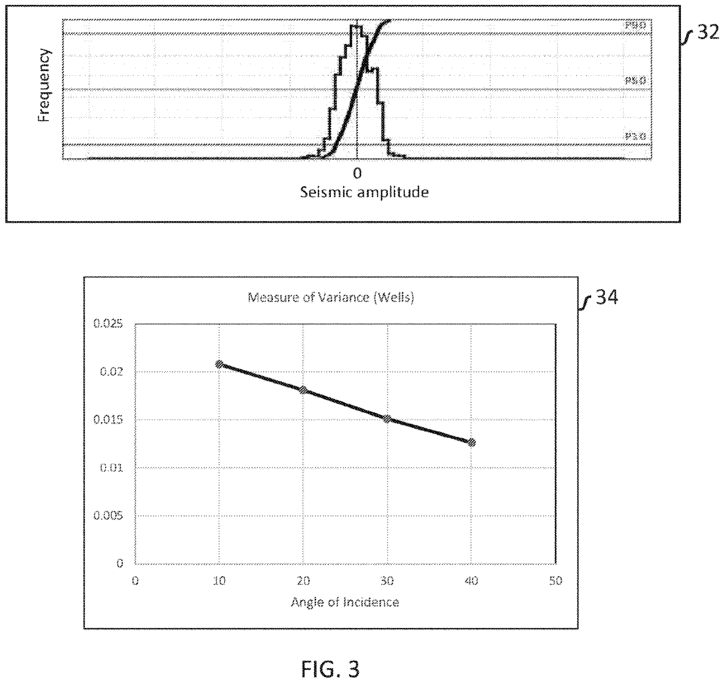

If well data are available in the AOI (10A), method 100 calculates shale-shale AVA responses from the well logs to obtain statistical properties (12). In an embodiment, calculating the shale-shale AVA responses may be done by identifying one or more portions in each well containing only shale-rich intervals. This identification may make use of prior information of the AOI including formation markers, well log cutoffs, and the like, and may target a single shale formation or multiple shale formations depending on local geology. These portions are then concatenated to make a shale pseudowell populated with P-wave velocity (Vp), S-wave velocity (Vs), and density ($\rho$) logs. If shale intervals are being sampled over a large depth range, well logs may be detrended to a common depth using compaction trends prior to concatenation. The method may then generate synthetic seismic using, by way of example and not limitation, the Zoeppritz equations along the pseudowell using a unit wavelet. The AVA response is sampled to build a cumulative distribution function of seismic amplitudes for each angle stack or seismic gather. As shown in Figure 3 panel 32, the mean of this cumulative distribution function should be approximately zero for each angle stack or seismic gather. Figure 3 panel 34 demonstrates calculating a measure of variance for each angle stack (P20-P80 range, etc.). The shale-shale AVA response data calculated from well logs (12) can be added to the global database (10C).

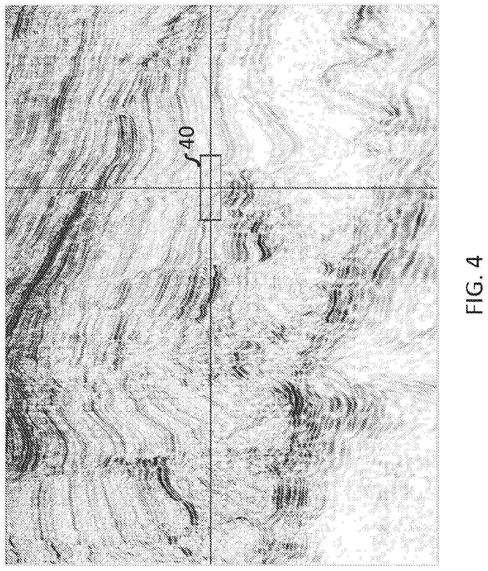

Referring again to Figure 2, method 100 analyzes the seismic amplitudes in the seismic dataset for a known or suspected shale-rich interval (15). In an embodiment, this is done by identifying volumes of the seismic data that are low reflectivity and/or which are known to be bounded by guide horizons, well markers, or the like. This process can be performed manually by a human or automatically by a computer. If performed manually, shale volumes are identified in seismic data using a three-dimensional probe (IL, XL, Time/Depth) that is sized to match the expected thickness of the shale interval. An example of a selection is shown in Figure 4 as box 40. In an embodiment, at least several dozen points are picked. Alternatively, shale-rich intervals can be identified automatically by a computer using guide horizons representing the top and base of shale-rich intervals or the like. Then the statistical properties of the seismic amplitudes within each selection are calculated. As with the well log data, a cumulative distribution function of seismic amplitudes is generated for each angle stack for each individual shale volume identified through manual or automatic picking.

Once the statistical properties of the seismic amplitudes within each selection are calculated, they can be examined to see if they accurately represent the expected behavior for shale-shale responses. Any points that do not have an AVA response consistent with shale (i.e., low reflectivity, mean approximately zero for all angle stacks, variance that decreases with angle) should be discarded. Only points that are consistent with shale should be accepted. For each accepted shale point, the method will calculate the same measure of variance as a function of angle that was used for the well data. The measure of variation can be plotted as a function of time or depth depending on the domain of the seismic data to determine whether constant or time/depth-varying scalars are preferred.

Referring again to Figure 2, method 100 can now calculate seismic scalars for each angle stack or seismic gather (16). The calculation uses the measure of variation and is generally of the form "scalar=well_value/seismic_value". These may be constant scalars (the seismic value is an average of all of the seismic shale points) or time/depth-varying scalars (the seismic value is found by performing linear regression to find a best-fit line of shale points as a function of time or depth). The use of time/depth-varying scalars is particularly important for cases where shale points and intervals of interest have large differences in time/depth.

In an embodiment, the constant scalars may be calculated as:

$$S_i = \frac{m_i}{\sum_{k=1}^{N} d_{i,k} / N}$$

$$d_{i,k} = \overline{P20}_{i,k} + \overline{P80}_{i,k}$$

$$m_i = (\overline{P20}_i + \overline{P80}_i)$$

Where,

$S_i$: Scalar of $i_{th}$ angle stack

$d_{i,k}$: sum of the absolute values of the P20 and P80 ranges for the $k_{th}$ observation of $i_{th}$ angle stack

$m_i$: sum of the absolute values of the P20 and P80 ranges for well based model synthetic for the $i_{th}$ angle stack

For time/depth-varying scalars,

$$S_{i,t} = m_i / A_i \times t + B_i$$

Where,

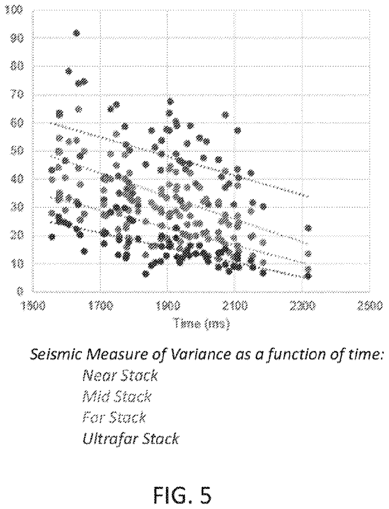

$A_i$, $B_i$: Coefficients of linear regression of all observed $d_{i,k}$ as function of Time/Depth (t) This is illustrated in Figure 5.

In an embodiment, both constant scalars and time/depth-varying scalars may be calculated but only one or the other will be applied to the data at a time. Constant scalars are a single scalar applied to an entire angle or offset stack. For time/depth varying scalars, each angle/offset stack will have a function that varies along the time or depth axis.

Referring again to Figure 2, the scalars are applied to the seismic data (17). This generates a calibrated seismic dataset that may be used for additional seismic processing, imaging, interpretation, and analysis. By comparing the seismic attributes associated with forward models generated from well logs to those observed in calibrated seismic data, rock properties such as porosity, lithology, fluid type and saturation, can be estimated.

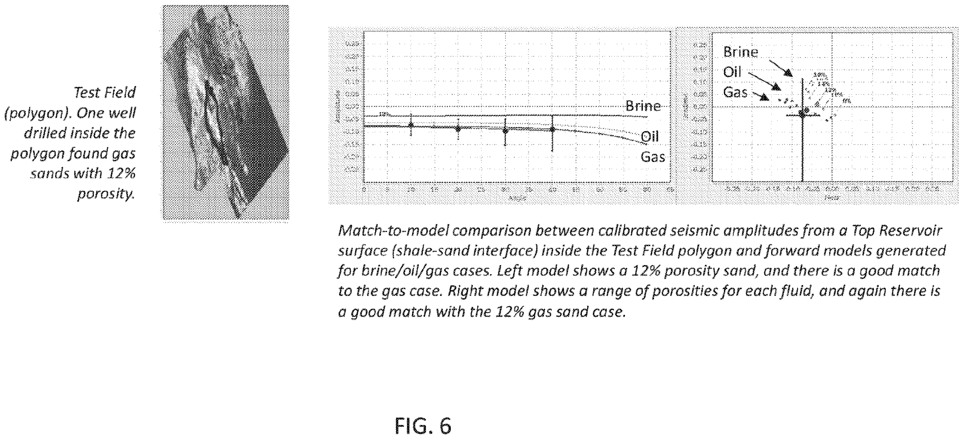

The method 100 has an optional quality control (QC) operation (18). Figure 6 illustrates an embodiment of the optional QC step. If the seismic data covers an area with one or more previously drilled wells, where the reservoir properties (thickness, porosity, fluid type, etc.) are known, it is possible to QC the scalars by comparing the AVA response between the calibrated seismic data and forward models. In Figure 6, an example from Test Field is shown. Well logs (P-wave velocity (Vp), S-wave velocity (Vs), and density ($\rho$)) were used to generate forward models for the Top Reservoir reflection (sand-shale interface) for a variety of fluid types. A good match between the calibrated seismic amplitudes extracted in the Test Field polygon was demonstrated with forward models constructed using the same porosity and fluid type encountered in a previously drilled well. This match demonstrates that the application of the shale calibration method was successful in this case.

The seismic calibration method based on shale statistics illustrated by method 100 has many advantages over conventional calibration methods. It has improved computational efficiency on the order of ~20 times faster: for one test, shale calibration, which was completed in a matter of a few hours, provided a better match-to-model than a traditional well-based seismic calibration workflow that took several days to complete. This method can be even more efficient for seismic datasets that are in depth, because it does not require that the seismic data be converted from depth to time before performing the calibration workflow. This will also prevent errors that may accumulate during the depth to time conversions in a conventional method.

The present invention also has improved accuracy. The scalars from shale calibration have less uncertainty because they were calculated from more data points. Whereas scalars from traditional calibration workflows are typically based on a small number of data points (number of wells*number of windows), the user can easily pick as many shale points as they like. If picked over a shale-rich interval with structural relief, shale points will have better vertical sampling than traditional calibration workflows, which typically rely on a small number of windows with fixed time/depth ranges. Each shale point selected by the user or computer samples seismic data from a 3D volume, which increases the statistical robustness of the method.

In addition to improved computational efficiency and improved accuracy, the present invention is also easier to use. Its speed and accuracy make it a superior method for calibrating seismic surveys in critical situations such as time-sensitive projects in areas where wells exist in the volume of interest and high-risk projects in frontier areas where there are no well logs available.

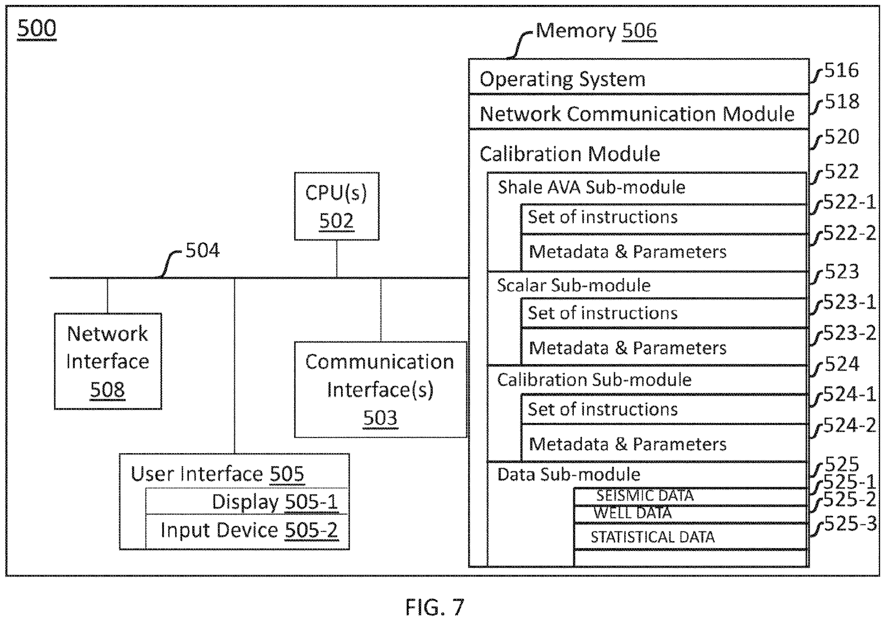

Figure 7 is a block diagram illustrating a seismic data calibration system 500, in accordance with some embodiments. While certain specific features are illustrated, those skilled in the art will appreciate from the present disclosure that various other features have not been illustrated for the sake of brevity and so as not to obscure more pertinent aspects of the embodiments disclosed herein.

To that end, the seismic data calibration system 500 includes one or more processing units (CPUs) 502, one or more network interfaces 508 and/or other communications interfaces 503, memory 506, and one or more communication buses 504 for interconnecting these and various other components. The seismic data calibration system 500 also includes a user interface 505 (e.g., a display 505-1 and an input device 505-2). The communication buses 504 may include circuitry (sometimes called a chipset) that interconnects and controls communications between system components. Memory 506 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 506 may optionally include one or more storage devices remotely located from the CPUs 502. Memory 506, including the non-volatile and volatile memory devices within memory 506, comprises a non-transitory computer readable storage medium and may store seismic data, velocity models, seismic images, and/or geologic structure information.

In some embodiments, memory 506 or the non-transitory computer readable storage medium of memory 506 stores the following programs, modules and data structures, or a subset thereof including an operating system 516, a network communication module 518, and a calibration module 520.

The operating system 516 includes procedures for handling various basic system services and for performing hardware dependent tasks.

The network communication module 518 facilitates communication with other devices via the communication network interfaces 508 (wired or wireless) and one or more communication networks, such as the Internet, other wide area networks, local area networks, metropolitan area networks, and so on.

In some embodiments, the calibration module 520 executes the operations of method 100. Calibration module 520 may include data sub-module 525, which handles the seismic dataset 525-1, any well data (e.g. well logs) 525-2, and/or statistical shale data 525-3. This data is supplied by data sub-module 525 to other sub-modules.

Shale AVA sub-module 522 contains a set of instructions 522-1 and accepts metadata and parameters 522-2 that will enable it to execute operations for calculating shale-shale AVA responses and shale-rich AVA responses as disclosed in method 100. The scalar function sub-module 523 contains a set of instructions 523-1 and accepts metadata and parameters 523-2 that will enable it to calculate constant scalars and/or time/depth-varying scalars as disclosed in method 100. The calibration sub-module 524 contains a set of instructions 524-1 and accepts metadata and parameters 524-2 that will enable it to apply the scalars to the seismic data and optionally perform the QC disclosed in method 100. Although specific operations have been identified for the sub-modules discussed herein, this is not meant to be limiting. Each sub-module may be configured to execute operations identified as being a part of other sub-modules, and may contain other instructions, metadata, and parameters that allow it to execute other operations of use in processing seismic data and generate the seismic image. For example, any of the sub-modules may optionally be able to generate a display that would be sent to and shown on the user interface display 505-1. In addition, any of the data or processed data products may be transmitted via the communication interface(s) 503 or the network interface 508 and may be stored in memory 506.

Method 100 is, optionally, governed by instructions that are stored in computer memory or a non-transitory computer readable storage medium (e.g., memory 506 in Figure 7) and are executed by one or more processors (e.g., processors 502) of one or more computer systems. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, method 100 is described as being performed by a computer system, although in some embodiments, various operations of method 100 are distributed across separate computer systems.

While particular embodiments are described above, it will be understood it is not intended to limit the invention to these particular embodiments. On the contrary, the invention includes alternatives, modifications and equivalents that are within the scope of the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

**1.** A computer-implemented method (100) of seismic data calibration, comprising:

a. receiving, at a computer processor, a seismic dataset representative of a subsurface volume of interest, wherein the seismic data was acquired at a surface as seismic traces;

b. obtaining first statistical shale properties including first shale-shale AVA responses, wherein the first statistical shale properties are obtained from well logs (12) or from a global database (14);

c. calculating second statistical shale properties of seismic amplitudes of the seismic dataset within a shale-rich interval;

d. accepting points in the shale-rich interval that have second statistical shale properties that represent the expected behavior for shale-shale responses, and calculating (16) scalars based on the accepted points and the first statistical shale properties; and

e. applying (17) the scalars to the seismic dataset to generate a calibrated seismic dataset.

**2.** The method (100) of claim 1 further comprising confirming (18) accuracy of the scalars by comparing the calibrated seismic dataset with forward modeling in areas with known reservoir properties.

**3.** A computer system (500), comprising:

one or more processors (502); and
memory (506),
wherein one or more programs are stored in the memory (506) and configured to be executed by the one or more processors (502), the one or more programs including instructions that when executed by the one or more processors (502) cause the computer system (500) to carry out the method of claim 1 or 2.

**4.** One or more programs comprising instructions which, when executed by an electronic device (500) with one or more processors (502) and memory (506), cause the device (500) to carry out the method of claim 1 or 2.

**5.** A non-transitory computer readable storage medium (506) storing the one or more programs of claim 4.

## Patentansprüche

**1.** Computerimplementiertes Verfahren (100) zur Kalibrierung seismischer Daten, umfassend:

a. Empfangen, an einem Computerprozessor, eines seismischen Datensatzes, der ein unterirdisches Volumen von Interesse darstellt, wobei die seismischen Daten als seismische Spuren an einer Oberfläche erfasst wurden;

b. Erhalten von ersten statistischen Schiefereigenschaften, darunter erste Schiefer-Schiefer-AVA-Antworten, wobei die ersten statistischen Schiefereigenschaften aus Bohrprotokollen (12) oder aus einer globalen Datenbank (14) erhalten werden;

c. Berechnen von zweiten statistischen Schiefereigenschaften von seismischen Amplituden des seismischen Datensatzes in einem schieferreichen Intervall;

d. Akzeptieren von Punkten in dem schieferreichen Intervall, die zweite statistische Schiefereigenschaften aufweisen, die das erwartete Verhalten für Schiefer-Schiefer-Antworten darstellen, und Berechnen (16) von Skalaren auf der Grundlage der akzeptierten Punkte und der ersten statistischen Schiefereigenschaften; und

e. Anwenden (17) der Skalare auf den seismischen Datensatz, um einen kalibrierten seismischen Datensatz zu erzeugen.

**2.** Verfahren (100) nach Anspruch 1, ferner umfassend Bestätigen (18) der Genauigkeit der Skalare durch Vergleichen des kalibrierten seismischen Datensatzes mit einer Vorwärtsmodellierung in Bereichen mit bekannten Reservoireigenschaften.

**3.** Computersystem (500), umfassend:

einen oder mehrere Prozessoren (502); und
einen Speicher (506),
wobei ein oder mehrere Programme in dem Speicher (506) gespeichert und dazu ausgelegt sind, durch den einen oder die mehreren Prozessoren (502) ausgeführt zu werden, wobei das eine oder die mehreren Programme Anweisungen beinhalten, die bei Ausführung durch den einen oder die mehreren Prozessoren (502) bewirken, dass das Computersystem (500) das Verfahren nach Anspruch 1 oder 2 ausführt.

**4.** Programm oder mehrere Programme, die Anweisungen umfassen, die bei Ausführung durch eine elektronische Vorrichtung (500) mit einem oder mehreren Prozessoren (502) und einem Speicher (506) bewirken, dass die Vorrichtung (500) das Verfahren nach Anspruch 1 oder 2 ausführt.

**5.** Nichtflüchtiges computerlesbares Speichermedium (506), das das eine oder die mehreren Programme nach Anspruch 4 speichert.

**Revendications**

1. Procédé mis en oeuvre par ordinateur (100) d'étalonnage de données sismiques, le procédé comprenant les étapes suivantes :

   a. recevoir, par un processeur informatique, un ensemble de données sismiques représentatif d'un volume souterrain d'intérêt, dans lequel les données sismiques ont été acquises à la surface sous forme de traces sismiques ;
   b. obtenir des premières propriétés statistiques des schistes, y compris des premières réponses AVA des schistes-schistes, où les premières propriétés statistiques des schistes sont obtenues à partir de diagraphies de puits (12) ou d'une base de données globale (14) ;
   c. calculer des deuxièmes propriétés statistiques des schistes à partir d'amplitudes sismiques de l'ensemble de données sismiques dans un intervalle riche en schistes ;
   d. accepter des points dans l'intervalle riche en schistes qui ont des deuxièmes propriétés statistiques de schistes qui représentent le comportement attendu pour les réponses de schistes-schistes, et calculer (16) des scalaires basés sur les points acceptés et les premières propriétés statistiques des schistes ; et
   e. appliquer (17) les scalaires à l'ensemble de données sismiques pour générer un ensemble de données sismiques étalonnées.

2. Procédé (100) selon la revendication 1, comprenant en outre de confirmer (18) la précision des scalaires en comparant l'ensemble de données sismiques étalonnées avec la modélisation prospective dans des zones dont les propriétés de réservoir sont connues.

3. Système informatique (500) comprenant :

   un ou plusieurs processeurs (502) ; et
   une mémoire (506),
   dans lequel un ou plusieurs programmes sont stockés dans la mémoire (506) et sont configurés pour être exécutés par les un ou plusieurs processeurs (502), les un ou plusieurs programmes incluant des instructions qui, lorsqu'elles sont exécutées par les un ou plusieurs processeurs (502), amènent le système informatique (500) à mettre en oeuvre le procédé de l'une des revendications 1 ou 2.

4. Un ou plusieurs programmes comprenant des instructions qui, lorsqu'elles sont exécutées par un dispositif électronique (500) doté d'un ou plusieurs processeurs (502) et d'une mémoire (506), amènent le dispositif (500) à mettre en oeuvre le procédé de l'une des revendications 1 ou 2.

5. Support de stockage non transitoire lisible par ordinateur (506) stockant les un ou plusieurs programmes de la revendication 4.

Shale-shale AVA response for Test Field

FIG. 1

FIG. 2

EP 3 999 880 B1

FIG. 3

FIG. 4

Seismic Measure of Variance as a function of time:

Near Stack
Mid Stack
Far Stack
Ultrafar Stack

FIG. 5

*Test Field (polygon). One well drilled inside the polygon found gas sands with 12% porosity.*

*Match-to-model comparison between calibrated seismic amplitudes from a Top Reservoir surface (shale-sand interface) inside the Test Field polygon and forward models generated for brine/oil/gas cases. Left model shows a 12% porosity sand, and there is a good match to the gas case. Right model shows a range of porosities for each fluid, and again there is a good match with the 12% gas sand case.*

FIG. 6

EP 3 999 880 B1

**500**

Memory **506**

| | |
|---|---|
| Operating System | 516 |
| Network Communication Module | 518 |
| Calibration Module | 520 |

CPU(s) **502**

504

Network Interface **508**

Communication Interface(s) **503**

User Interface **505**
Display **505-1**
Input Device **505-2**

| Calibration Module | |
|---|---|
| Shale AVA Sub-module | 522 |
| Set of instructions | 522-1 |
| Metadata & Parameters | 522-2 |
| Scalar Sub-module | 523 |
| Set of instructions | 523-1 |
| Metadata & Parameters | 523-2 |
| Calibration Sub-module | 524 |
| Set of instructions | 524-1 |
| Metadata & Parameters | 524-2 |
| Data Sub-module | 525 |
| SEISMIC DATA | 525-1 |
| WELL DATA | 525-2 |
| STATISTICAL DATA | 525-3 |

FIG. 7

**EP 3 999 880 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10274625 B2

**Non-patent literature cited in the description**

- **DHANANJAY KUMAR.** Seismic amplitude calibration for quantitative interpretation. *GEOS Alumni Journal,* 01 September 2018, vol. 2018, 34-37